# EUROPÄISCHE PATENTSCHRIFT

(11) **EP 1 894 855 B1**
(45) Veröffentlichungstag und Bekanntmachung des Hinweises auf die Patenterteilung: **24.12.2008**
(21) Anmeldenummer: 06018442.1
(22) Anmeldetag: 04.09.2006
(51) Int. Cl.: B65D 88/06, B65D 90/08, B65D 90/00, B29C 65/02, B29C 65/56

(54) **Wassertank und Verfahren zum Herstellen des Wassertanks**
Water tank and method of manufacturing thereof
Citerne d'eau et méthode pour sa fabrication

(43) Veröffentlichungstag der Anmeldung: 05.03.2008
(73) Patentinhaber: Graf Plastics GmbH, 79331 Teningen (DE)
(72) Erfinder: Graf, Otto P., 79331 Teningen (DE)
(74) Vertreter: Grünecker, Kinkeldey, Stockmair & Schwanhäusser Anwaltssozietät

(56) Entgegenhaltungen:
- EP-A1- 0 870 877
- EP-A2- 0 064 310
- DE-A1- 19 909 041
- DE-U1- 9 416 968
- JP-A- 10 174 985
- US-A- 5 361 930

## Beschreibung

Die Erfindung betrifft einen Wassertank gemäß Oberbegriff des Patentanspruchs 1 und ein Verfahren gemäß Oberbegriff des Patentanspruchs 11.

Bei dem aus EP 0 870 877 B1 und aus dem Komplettprogramm 2006 der Firma Otto Graf GmbH Kunststofferzeugnisse, D-79331 Teningen, Carl-Zeiss-Str. 2-6, Katalog R26, "Regenwassernutzung mit System", Seite 34, bekannten Wassertank, der aus zwei napfartigen, identischen Hälften durch stellenweises Klammerungsfügen der Öffnungsrandstrukturen mit klammerförmigen Schnellverbindern erstellt wird, sind die Öffnungsrandstrukturen so ausgebildet, dass der äußeren abgeflachte Öffnungsrand nur eine Weite entsprechend der Stärke der Dichtungskanalwand und der innere Öffnungsrand nur eine Weite entsprechend der Hälftenwandstärke haben. In gefügtem und geklammertem Zustand der beiden Hälften stehen die äußeren Öffnungsränder aufeinander, während die inneren Öffnungsränder voneinander beabstandet sind. In den Dichtungskanälen beider Hälften ist eine einstückige, im Querschnitt etwa doppelt konische Dichtung enthalten. Die Schnellverbinder sind außen im Umfangsrichtung des Wassertanks über die Klammerwiderlager geschoben. Die Schnellverbinder und die Dichtung tragen jedoch erheblich zu den Gesamtkosten des Wassertanks bei. Das Kunststoffmaterial ist beispielsweise HDPE oder PP, insbesondere glasfaserverstärktes PP. Der Wassertank ist nur in teilbarer Form mittels der Schnellverbinder erstellbar. Dies ist zwar für über große Distanz bis zum Einbauort oder ins Ausland exportierte Hälften wegen der Stapelbarkeit beim Transport aus logistischen Gründen vorteilhaft, bedingt aber den relativ aufwändigen Zusammenbau vor Ort. Die Handhabung der beispielsweise ca. 30 kg schweren Hälften beim Zusammenbau und das Einfädeln der Dichtung und das Anbringen der beispielsweise 24 Schnellverbinder ist zeitaufwändig, was einen erheblichen Kostenfaktor bedeuten kann, und bei manchen Endverbrauchern die Akzeptanz negativ beeinflusst. Bei kürzeren Transportdistanzen oder günstigen Transportbedingungen, beispielsweise im Inland, kann der Kostenfaktor der Montage vor Ort ungleich schwerer wiegen als der Kostenvorteil des gestapelten Transports, so dass dann die Montage des Wassertanks beim Hersteller oder Großhändler und die Lieferung des fertig montierten Wassertanks günstiger und damit auch die Akzeptanz bei mehr Endverbrauchern besser wären. Es wäre erstrebenswert, in solchen Fällen den Wassertank einbaufertig, jedoch ohne die Schnellverbinder und die Dichtung zu liefern, beispielsweise indem die Hälften ohne Schnellverbinder und die Dichtung miteinander verschweißt werden. Jedoch lassen die schmalen Öffnungsränder der Hälften des bekannten Wassertanks ein zuverlässig dichtes Verschweißen nicht zu.

Aus DE-U-94 16 968 ist eine nur teilbare Version eines aus zwei nicht identischen Tankteilen gefügten Wassertanks bekannt. Die Tankteile sind aus faserverstärktem Kunststoff tiefgezogen. Als lösbare Klammerungsverbindung der Tankteile sind lokale Schraubverbindungen der Öffnungsrandstrukturen vorgesehen. Die Tankteile werden unter Einbringen eines Dichtungsmittels in die Dichtungskanäle wasserdicht verschraubt. Über die Fügeebene stehen jeweils abwechselnd schräge Krempen vor, die das Zentrieren der Tankteile beim Fügen erleichtern und die Gestaltfestigkeit der "Offnungsrandstrukturen erhöhen. In den Tankteilwänden geformte Rippen enden im Abstand von der Fügeebene in einem umlaufenden Sockel. Die Tankteile werden entweder beim Hersteller oder vor Ort gefügt.

Aus DE-A-199 09 041 ist ein Mehrkammerbehälter aus Kunststoff bekannt, der aus zwei nicht identischen Spritzguss-Behälterteilen mit randseitigen Passflächen jeweils breiter als die Wandstärke monolithisch durch Schweißfügen in der Fügeebene erstellt wird. Der Mehrkammerbehälter dient zum Einbau in Kraftfahrzeuge. Die Passflächen werden beim Schweißfügen angeschmolzen und aufeinander gepresst. Der Behälter wird zum Speichern von Betriebsflüssigkeiten, wie der Bremsflüssigkeit oder dem Scheibenwaschwasser, benutzt.

Der Erfindung liegt die Aufgabe zugrunde, einen kostengünstigen, betriebssicheren Wassertank der eingangs genannten Art anzugeben, der im Hinblick auf unterschiedliche Endverbraucherwünsche und Transportkonditionen universell erstellbar und verfügbar ist.

Die gestellte Aufgabe wird erfingdungsgemäß mit den Merkmalen des Patentanspruchs 1 und verfahrensgemäß mit den Merkmalen des Patentanspruchs 11 gelöst.

Indem die Öffnungsrandstruktur jedes Tankteils der beiden untereinander identischen, kostengünstig in demselben Formwerkzeug herstellbaren Tankteile mit in der Fügeebene liegenden, durch den Dichtungskanal voneinander getrennten, inneren und äußeren, durch den Dichtungskanal separierten Passflächen ausgebildet wird, deren Weiten die Wandstärke der zur jeweiligen Passfläche führenden Wand mindestens um etwa die Hälfte übersteigen, und mit Klammerwiderlagern angrenzend an die äußere Passfläche, kann jeder in nur einem einzigen Spritzformwerkzeug hergestellte Tankteil wahlweise zum Erstellen entweder eines monolithischen, in den Passflächen verschweißten Wassertanks ohne Klammern und Dichtungsmittel oder zum Erstellen eines in herkömmlicher Weise geklammerten und abgedichteten Wassertanks verwendet werden. Dadurch wird die Akzeptanz bei Endverbrauchern insbesondere bei kürzeren Transportdistanzen, gesteigert, weil der Endverbraucher einen weitestgehend betriebsfertigen monolithischen Wassertank erhält, der wegen des Wegfalls der Klammern und der Dichtungsmittel kostengünstiger sein kann als die geteilte Version, jedoch nicht mehr zusammengebaut werden muss. In Fällen, in denen z.B. die Transportkosten einen dominanten Faktor darstellen oder der Endverbraucher darauf besteht, kann nach wie vor mit den Tankteilen der gestapelte Transport und die Klammerungsfügung vor Ort praktiziert werden. Wegen der so insgesamt zu erwartenden höheren Stückzahl der Tankteile kann der Hersteller die Preise verringern, was die Akzeptanz beim Endverbraucher sowohl beim monolithischen als auch beim teilbaren Wassertank nochmals verbessert. Ohne zusätzliche Kosten lässt sich mit denselben Tankteilen und den monolithischen und teilbaren Versionen ein größeres Marktsegment erzielen als für nur teilbare Versionen. Die bewusst verbreiterten Passflächen gestatten eine qualitativ hochwertige Schweißfügung ohne teure Dichtungsmittel und Klammern, da sie herstellungs-, toleranz- oder materialbedingte, oder durch Temperatureinflüsse oder einwirkende Kräfte entstehende gegenseitige Fehlausrichtungen beim Schweißfügen kompensieren, und sind im teilbaren Wassertank ebenfalls vorteilhaft, da sie die Stabilität der geklammerten und abgedichteten Öffnungsrandstrukturen erhöhen. Die Stapelbarkeit der Tankteile für den Transport und die Lagerhaltung wird durch die Öffnungsrandstrukturen nicht beeinträchtigt. Eine Grundvoraussetzung ist es jedoch, die beiden Tankteile identisch auszubilden, d.h., ein einziges Spritzformwerkzeug verwenden zu können, unabhängig davon, ob später ein monolithischer oder teilbarer Wassertank erstellt wird.

Verfahrensgemäß ist das durchgehende Schweißfügen der direkt aufeinanderliegenden inneren und äußeren Passflächen der identischen Tankteile kostengünstig und zuverlässig, welche Tankteile an sich für die teilbare Version konzipiert sind, so dass der Endverbraucher einen weitestgehend betriebsbereiten monolithischen Wassertank erhält, während die Passflächen bei der Erstellung des teilbaren Wassertanks keinen Nachteil bedeuten, da das Klammerungsfügen der gelieferten Tankteile mit der eingesetzten Dichtung uneingeschränkt möglich ist. Beim Klammerungsfügen werden die Passflächen gegebenenfalls über die Dichtung voneinander im Abstand gehalten oder unter leichtem Kontakt gegeneinander gespannt.

Die Tankteile sind zweckmäßig stabile, gestaltfeste und sehr formtreue Kunststoff-Spritzprägeteile. Beim Spritzprägen wird im Unterschied zum Spritzgießen mit einem Nachhub einer Formhälfte gearbeitet, um den Spritzprägeformteil mit weniger Verzug und sehr formtreu auszubilden. Dies ermöglicht es z.B. unter anderem, mit unverstärktem Kunststoff zu arbeiten. Beim Spritzprägen herrscht ein geringer Innendruck und lässt sich eine gegenüber dem Spritzgießen kleinere Maschine verwenden. Besonders zweckmäßige Kunststoffmaterialen sind beispielsweise HDPE oder PP (hochdichtes Polyäthylen bzw. Polypropylen).

Zweckmäßig weist die Öffnungsrandstruktur außen direkt oder über eine Flanschverlängerung angrenzend an die äußere Passfläche an beabstandeten Stellen entlang des Umfangs Klammerwiderlager auf. Diese Klammerwiderlager werden zum Erstellen des geteilten Wassertanks benutzt, haben hingegen bei dem monolithischen Wassertank keine Funktion. Sie können deshalb, gegebenenfalls mit der Flanschverlängerung, bereits beim Hersteller des Wassertanks nach dem Formen der Tankteile oder erst nach dem Schweißfügen entfernt werden.

Die Gestaltfestigkeit des Wassertanks, und dessen universelle, modulare Gestaltbarkeit sind verbessert, da die Wand jedes Tankteils mit einwärts vorspringenden, etwa senkrecht bis zur Fügeebene verlaufenden, entlang der inneren Passfläche voneinander beabstandeten Rippen geformt ist, und die in der Fügeebene liegenden Rippenendbereiche Erweiterungen der inneren Passfläche sind. Bei Erstellung des monolithischen Wassertanks werden so die Schweißflächen vergrößert und wird die Schweißverbindung statisch sehr stabil. Die gesteigerte Gestaltfestigkeit ermöglicht auch relativ große Fassungsvermögen (Stabilität gegen Druckkräfte von innen und/oder außen).

Obwohl der Wassertank, wie an sich bekannt, aus den zwei jeweils napfförmig ausgebildeten Tankteilen erstellt werden kann, ist es besonders zweckmäßig, den Wassertank zumindest annähernd als Hohlzylinder mit nach außen bombierten Endkappen auszubilden und die Öffnungsrandstrukturen in Zylinderlängsrichtung zu platzieren, derart, dass sie die Zylinderachse enthalten. Diese Zylinderform mit bombierten Endkappen ist zwar bei einstückig rotationsgeformten Behältern bekannt, jedoch bisher bei teilbaren oder monolithisch gefügten Wassertanks nicht realisiert. In Verbindung mit den eingeformten Rippen und der stabilen Ausbildung der Öffnungsrandstrukturen können Wassertanks mit einem Inhalt zwischen etwa 1000 l bis 6000 l und größer erstellt werden, beispielsweise mit einer Stufung von 1000, 2000, 2500, 3500, 4500, 5000, 6000, 8000, 9000, 10.000 und 12.000 l. Diese Wassertanks können unterirdisch oder oberirdisch installiert sein. Dabei sind in jedem Tankteil die Rippen in den beiden Endkappenhälften und in dem zylindrischen Teil und dort jeweils zueinander parallel vorgesehen, um die Gestaltfestigkeit des Tankteils und damit des Wassertanks erheblich zu steigern. Im zylindrischen Teil des Tankteils können die Rippen durchgehen, während die Rippen in den Endkappenhälften im Abstand von der ersten bzw. letzten Rippe im zylindrischen Teil auslaufen. Dies ist formentechnisch günstig.

Bei einer weiteren, zweckmäßigen Ausführungsform ist im zylindrischen Teil des Tankteils parallel zur Fügeebene ein z.B. kreisrunder Domansatz eingeformt, in dem die Rippen des zylindrischen Teils ausgespart sind. Der Domansatz enthält eine zur Fügeebene parallele, runde Deckelscheibe, die in etwa mit dem Außenumriss der Endkappenhälften abschließt. Dadurch wird für den Transport des vor Ort erstellten Wassertanks gute Stapelbarkeit der Tankteile erzielt, und bleibt das Maß jedes Tankteils in der Richtung senkrecht zur Fügeebene kompakt. Die Deckelscheibe kann in einem Tankteil einfach entfernt werden, beispielsweise um einen Tankdom einzusetzen.

Die Rippen formen in der Öffnungsrandstruktur einer zweckmäßigen Ausführungsform einen geschlossenen z.B. trapezförmigen oder dreieckigen Querschnitt, so dass die durch die Rippenenden gebildeten Erweiterungen der inneren Passfläche jeweils ein geschlossener ebener Rand mit der Form des Rippenquerschnitts sind. Besonders zweckmäßig umgibt dieser Rand eine gegenüber der Fügeebene zurücktretende Vertiefung, um einen zum Schweißfügen in etwa gleich breiten Rand zu bilden, der übergangslos in die innere Passfläche übergeführt ist. Da die als Erweiterungen der inneren Passflächen in der Fügeebene liegenden Rippenenden ebenfalls verschweißt werden, sind die Schweißflächen vergrößert und die Betriebssicherheit erhöht. Im Grund der Vertiefung, zumindest einiger oder aller Rippen, ist eine Einsetzfassung für ein Zentrierglied eingeformt. Die Vertiefung hat - wie erwähnt - den Zweck, zum Schweißfügen des monolithischen Wassertanks einen in etwa gleichbleibend breiten Rand zu definieren. Gleichzeitig erfüllt sie die sekundäre Funktion, bei der Erstellung des teilbaren Wassertanks zunächst die Montage vereinfachende und die Stabilität der Fügung erhöhende Zentrierglieder einbringen zu können. Dies vereinfacht die Montage des teilbaren Wassertanks erheblich und trägt zu einer Entlastung der Dichtung gegen Scherkräfte bei.

Bei einer weiteren, besonders zweckmäßigen Ausführungsform ist zwischen jeweils zwei Rippen des zylindrischen Teils eine bis in die Fügeebene offene Trennwand-HalteTasche gebildet. Diese Tasche kann, falls gewünscht, benutzt werden, um in dem Wassertank wenigstens eine Trennwand zu installieren (Mehrkammer-Prinzip), wie sie für manche Einsatzfälle außerordentlich zweckmäßig ist.

Ein weiterer wichtiger Gedanke besteht darin, an dem Tankteil innen zwischen zumindest zwei Rippen im zylindrischen Teil zumindest einen zu den Rippen parallelen Dichtungs-Haltesteg anzuformen. Der Dichtungshaltesteg ermöglicht bei der teilbaren Version des Wassertanks das umfängliche Abdichten einer in die Tasche eingebauten Trennwand, und hat bei der monolithischen Version den zusätzlichen Vorteil, in der Fügeebene eine weitere Erweiterung der inneren Passfläche zu bilden, d.h. die zum Verschweißen nutzbare Fläche weiter zu vergrößern.

Verfahrensgemäß wird jede Öffnungsrandstruktur mit Klammerwiderlagern angrenzend an die äußere Passfläche spritzgeformt. Bei Wahl des monolithischen Wassertanks wird vor oder nach dem Schweißfügen jedes Klammerwiderlager mechanisch abgetragen, da es beim monolithischen Wassertank nicht gebraucht wird. Es ist allerdings nicht ausgeschlossen, dass die nicht benutzten Klammerwiderlager auch bei Wahl des monolithischen Wassertanks belassen werden.

Verfahrensgemäß wird ferner beim Schweißfügen jede Passfläche thermisch plastifiziert, und werden anschließend die plastifizierten Passflächen gegeneinander gepresst, vorzugsweise bis zur Formung aus der Fügeebene austretender Schweißwülste. Das Auftreten der Schweißwülste zeigt an, dass die Schweißfügung durchgehend und stabil sowie dicht geworden ist.

Schließlich kann es zweckmäßig sein, verfahrensgemäß jede Öffnungsrandstruktur angrenzend an die äußeren Passfläche mit einer äußeren Flanschverlängerung und den von der Fügeebene wegweisenden Klammerwiderlagern zu formen, und bei Wahl des monolithischen Wassertanks die Passflächen der beiden Tankteile bis zur Formung aus der Fügeebene herausquellender Schweißwülste zu verschweißen. Da der äußere Schweißwulst, wie üblich, z.B. aus ästhetischen Gründen, entfernt werden sollte, kann dies dann genutzt werden, mit dem äußeren Schweißwulst auch die Flanschverlängerung und die Klammerwiderlager abzutragen. Dadurch reduziert sich das Transportgewicht des monolithischen Wassertanks und erhält der Fügebereich ein ästhetisch ansprechendes Äußeres.

Ausführungsformen des Erfindungsgegenstandes werden anhand der Zeichnung erläutert. Es zeigen:
- Fig. 1: eine Perspektivansicht eines monolithischen Wassertanks, der aus zwei identischen Hälften gefügt ist,
- Fig. 2: mehrere zum Transport gestapelte Hälften zum Erstellen von Wassertanks in einer geteilten Version,
- Fig. 3: eine Teilschnittansicht des Fügebereiches des monolithischen Wassertanks von Fig. 1,
- Fig. 4: einen Teilschnitt des Fügebereiches der teilbaren Version des Wassertanks,
- Fig. 5: eine perspektivische Ansicht einer Hälfte,
- Fig. 6: ein perspektivisches Detail der in Fig. 5 gezeigten Hälfte,
- Fig. 7: einen vergrößerten Schnitt des Fügebereichs der monolithischen Version des Wassertanks,
- Fig. 8: einen vergrößerten Schnitt des Fügebereichs des teilbaren Wassertanks, und
- Fig. 9, 10, 11: Perspektivansichten weiterer Ausführungsformen.

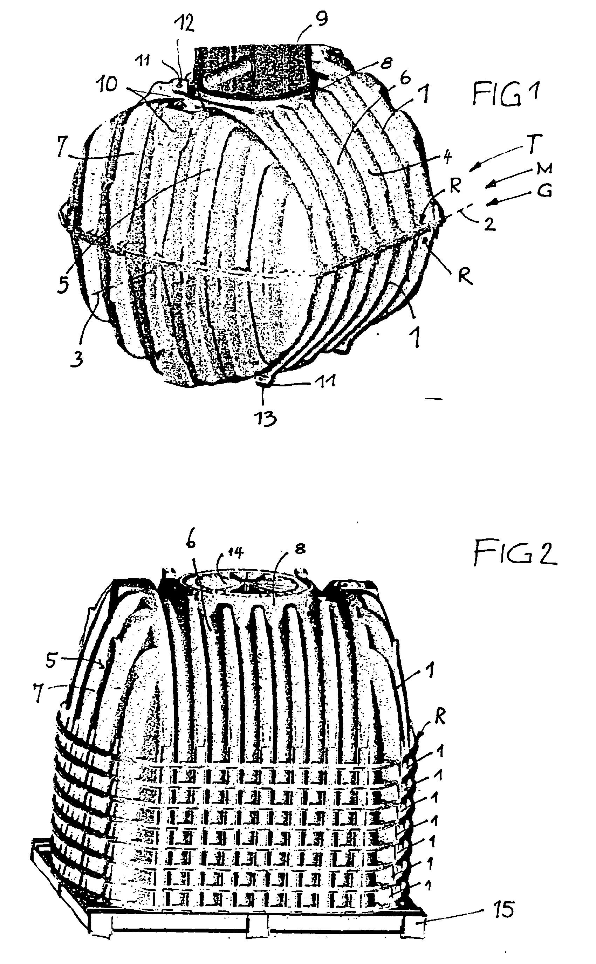

Ein in Fig. 1 schematisch gezeigter Wassertank T ist durch Fügen zweier identischer, offener Hälften 1 mit identischen Öffnungsrandstrukturen R entweder monolithisch M, d.h. nicht mehr teilbar, oder teilbar G erstellt.

Der Wassertank T hat in Fig. 1 die Form eines liegenden Zylinders mit zumindest weitestgehend zylindrischer Umhüllung und an beiden Zylinderenden nach außen bombierte Endkappen 5. In jeder Hälfte 1 sind einwärts vorspringende, zueinander parallele und im Wesentlichen senkrecht zur Fügeebene 2 verlaufende, in der Randstruktur R endende Rippen 6 geformt, die im Bereich eines in etwa mittig zwischen den Endkappen 5 eingeformten runden Domansatzes 8 ausgespart, abgeflacht oder unterbrochen sind. In der Fügeebene 2, in der die Öffnungsrandstrukturen R gefügt sind, liegt demzufolge auch die mit 3 angedeutete Achse des Zylinders. Der Wassertank T könnte jedoch (nicht gezeigt) auch aus zwei napfförmigen Hälften 1 gefügt sein, so dass dieser Wassertank dann die Form einer stehenden Tonne hat, ferner könnte ein runder stehender oder liegender Wassertank erstellt sein, gegebenenfalls sogar modular erweiterbar.

In den Endkappen 5 bzw. in jeder Endkappenhälfte sind ebenfalls einwärts vorspringende, zueinander im Wesentlichen parallele Rippen 7 eingeformt, die an den Randbereichen der Endkappen 5 enden.

In den Domansatz 8, der (s. Fig. 2) durch eine runde Deckelscheibe 14 verschlossen ist, kann zum Betrieb des Wassertanks nach Entfernen der Deckelscheibe 14 in der oberen Hälfte 1 ein Dom 9 montiert sein (Fig. 1).

In den Hälften können vorgeformte Bereiche 10 zum Anschließen von Rohrleitungen vorgesehen sein, sowie um den jeweiligen Domansatz 8 verteilte Fußteile 11, die mit Hebeösen 12 versehen sind, und in die wahlweise (jeweils unten) elastische Fußteile 13 einsetzbar sind (Transport).

Die beiden Hälften 1 sind identische Kunststoff-Spritzformteile, zweckmäßig Spritzpräge-Formteile, d.h. sie werden beim Spritzformen durch einen Nachhub einer Formhälfte stärker geprägt. Dadurch kann wegen niedrigeren Innendrucks eine kleinere Maschine benutzt werden. Als Kunststoffmaterial eignet sich besonders unverstärktes HDPE oder PP, obwohl andere Kunststoffmaterialien ebenfalls brauchbar sind. Gegebenenfalls wird faserverstärktes oder mineralverstärktes Kunststoffmaterial verwendet. Da die Hälften 1 identisch sind, können diese in ein und derselben Spritzform hergestellt werden. Dabei sind die Randstrukturen R der Hälften 1 so ausgebildet, dass sie es wahlweise ermöglichen, den Wassertank T monolithisch M auszubilden, oder teilbar G. Im Fall des monolithischen Wassertanks T sind die Hälften 1 mit ihren Öffnungsrandstrukturen R zweifach miteinander verschweißt. Im teilbaren Wassertank T werden die Öffnungsrandstrukturen R stellenweise durch Klammerungsfügen miteinander verbunden, wobei zwischen den Öffnungsrandstrukturen eine umlaufende Dichtung und gegebenenfalls Zentrierglieder eingesetzt sind. Zum Klammerungsfügen werden (in Fig. 1 nicht gezeigt) Schnellverbinder in Form von Klammern auf Klammerwiderlager in Richtung der Fügeebene bzw. in Umfangsrichtung aufgeschoben und verspannt.

Die Hälften 1 sind unabhängig davon, ob der monolithische oder der teilbare Wassertank erstellt wird, stapelbar.

Der Wassertank T wird z.B. mit einem Inhalt zwischen etwa 1000 l bis 12.000 l erstellt, beispielsweise mit einer Stufung von 1000l, 2000 l, 2500 l, 3500 l, 4500 l, 5000 l, 6000 l, 8000 l, 9000 l, 10.000 l und 12.000l.

Fig. 2 zeigt insgesamt acht ineinander gestapelte Hälften 1, beispielsweise während der Bevorratung zur Erstellung von vier monolithischen Wassertanks oder als fertiges Transportgebinde auf einer Palette 15 zur Erstellung von vier teilbaren Wassertanks erst am Aufstellungs- oder Verwendungsort. In den Domansätze 8 der Hälften 1 können die Deckelscheiben 14 noch enthalten sein. Gegebenenfalls wird bereits beim Hersteller die Deckelscheibe 14 jeder zweiten Hälfte entfernt. Die Hälften 1 sind so weit ineinander gestapelt, dass die Öffnungsrandstrukturen R einander relativ nahe sind, aber nicht aufstehen.

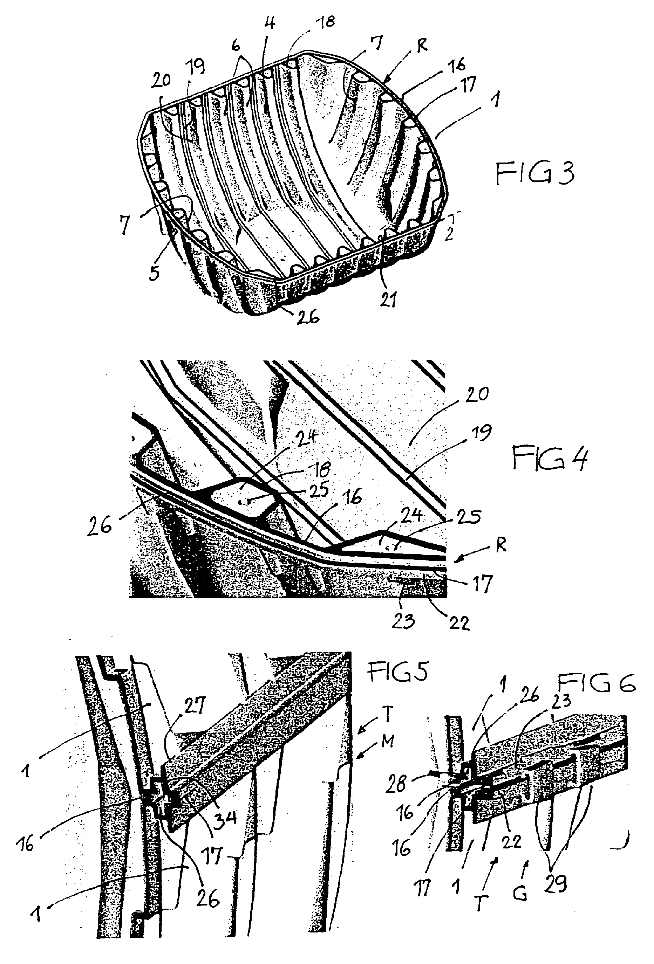

Fig. 3 zeigt eine Innenansicht einer Hälfte 1 und den Verlauf der Rippen 6 im zylindrischen Teil 4 sowie den Verlauf der Rippen 7 in der Hälfte jeder Endkappe 5. Alle Rippen 6, 7 erstrecken sich bis in die Fügeebene 2 der Öffnungsrandstruktur R. Dabei bildet jedes Rippenende 18 eine flächige Erweiterung einer inneren Passfläche 16 der Öffnungsrandstruktur, was anhand Fig. 4 erläutert werden wird. Ferner bilden jeweils zwei Rippen 6 im zylindrischen Teil 4 der Hälfte 1 eine Trennwand-Haltetasche 20, in die, bei Bedarf, eine Trennwand eingefügt werden kann (Mehrkammerwassertank). Am Grund der Trennwand-Haltetasche 20 verläuft parallel zu den Rippen 6 mindestens ein Dichtungshaltesteg 19, vorzugsweise ein Paar solcher Stege, bis in die Fügeebene 2 und bildet dort flächige Erweiterungen der inneren Passfläche 16. Durch einen Dichtungskanal 26 ist die innere Passfläche 16 von einer äußeren Passfläche 17 der Öffnungsrandstruktur R getrennt. Beide Passflächen 16, 17 erstrecken sich durchgehend entlang des Umfangs der Öffnungsrandstruktur R und dienen zum Schweißfügen zweier Hälften 1 zum monolithischen Wassertank T.

Fig. 4 verdeutlicht in vergrößertem Maßstab den Verlauf der inneren und äußeren Passflächen 16, 17 der Öffnungsrandstruktur R mit den Erweiterungen der Rippenenden 18, die als Randstreifen mit in etwa gleich bleibender Breite mit trapezförmigem oder dreieckigem Verlauf in die innere Passfläche 16 übergeführt sind, so dass zum Schweißfügen eine große Schweißfläche zur Verfügung steht, in der die Rippen 6, 7 den statischen Verbund verbessern. Zwischen den inneren und äußeren Passflächen 16, 17 verläuft der Dichtungskanal 26. An die äußeren Passfläche 17 schließt sich gegebenenfalls ein Flansch 22 an, an dem von der Fügeebene weg weisende Klammerwiderlager 23 angeformt sind.

Die Passflächen 16, 17, 18 liegen in der Fügeebene. Jedes Rippenende 18 umgibt eine gegenüber der Fügeebene zurückgesetzte Vertiefung 24. In allen oder zumindest einigen der Vertiefungen 24 ist in etwa mittig eine Einsetzaufnahme 25 geformt, in die bei der Erstellung des teilbaren Wassertanks Zentrierglieder eingesteckt werden, die die Montage erleichtern und im gefügten Wassertank stabilisierend und kraftabtragend wirken.

Fig. 5 zeigt einen Ausschnitt des aus zwei Hälften 1 monolithisch M erstellten Wassertanks T, wobei die inneren und äußeren Passflächen 16, 17, einschließlich der Rippenenden 18 und der Erweiterungen 21 miteinander dicht verschweißt sind. Zum Schweißen werden die Passflächen z.B. mittels beheizter Schweißflächen oder von Schweißelementen berührungslos plastifiziert und nach Entfernen der oder von den Schweißflächen bzw. Schweißelementen aufeinander gepresst, bis in der Fügeebene innen und außen Schweißwülste entstehen. In die Dichtungskanäle 26 wird keine Dichtung eingebracht. Die Dichtungskanäle 26 nehmen einen Teil der Schweißwülste auf. Auch Zentrierglieder werden hierbei nicht notwendigerweise in die Einsetzaufnahmen 25 eingesetzt. Eine Außenwand 34 jedes Dichtungskanals 26 ist durch einen von der Fügeebene weg strebenden Flansch 27 verlängert.

Nach dem Schweißfügen werden der äußere Schweißwulst und gegebenenfalls ein Teil des Flansches 22 mit den Klammerwiderlagern 23 entfernt, da diese Komponenten bei dem monolithischen Wassertank T keine Funktion haben. Fallweise können diese Komponenten aber auch belassen werden.

Fig. 6 zeigt eine ähnliche Ansicht wie Fig. 5 für den teilbaren Wassertank T, der unter Verwendung von Schnellverbindern 29 in Form von Klammern erstellt wird, die auf die Klammerwiderlager 23 am Flansch 22 in Umfangsrichtung aufgeschoben und festgesetzt werden. In die aufeinander ausgerichteten Dichtungskanäle 26 ist ein Dichtmittel 28 eingebracht, das aufgrund der Spannung der Schnellverbinder 29 die Dichtwirkung zwischen den Hälften 1 erzeugt. Die Passflächen 16, 17 stehen gegebenenfalls voneinander beabstandet oder liegen mit geringem Kontakt aneinander an. Der teilbare Wassertank wird am Gebrauchsort erstellt, nachdem die Hälften 1 dorthin transportiert worden sind. In einige oder in alle Einsetzaufnahmen 25 sind Zentrierglieder eingefügt, die die Montage erleichtern.

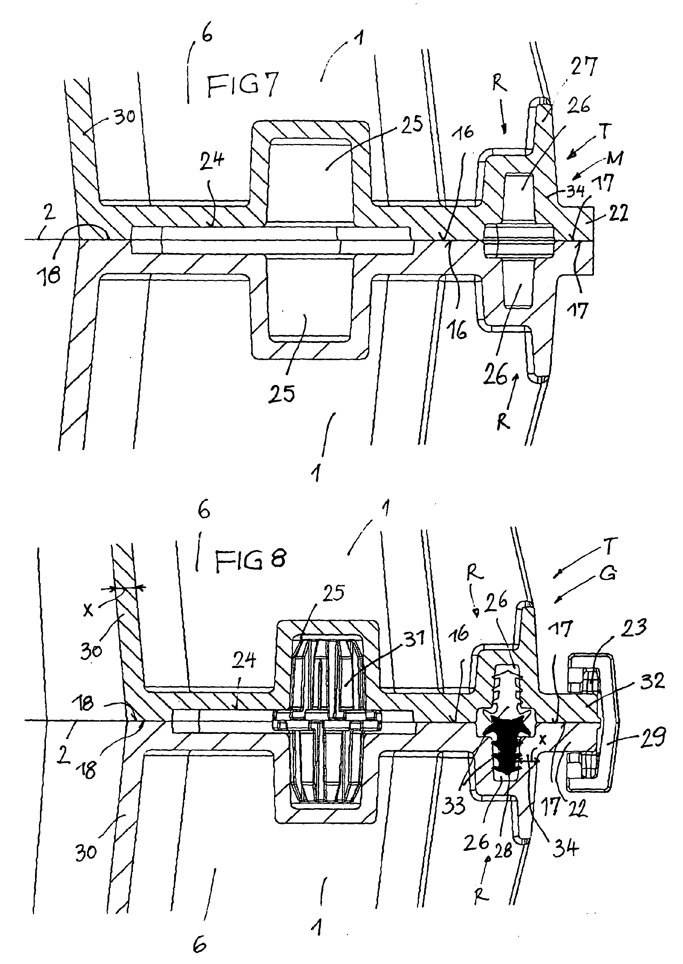

Fig. 7 ist eine Schnittansicht zu Fig. 5 und zeigt, wie die inneren und äußeren Passflächen 16, 17 unmittelbar aufeinanderliegen und miteinander verschweißt sind, wie auch die Rippenenden 18. Die Einsetzaufnahmen 25 bleiben frei, wie auch die Dichtungskanäle 26. Die Weite jeder inneren Passfläche 16 beträgt mindestens etwa 150% der Wandstärke x der Hälftenwand 30. Die Weite der äußeren Passfläche 17 beträgt mindestens etwa 150% der Stärke x der äußeren Dichtungskanalwand 34. Der äußere Bereich des Flansches 22 ist in Fig. 7 mit dem äußeren Schweißwulst bereits entfernt. Die Vertiefungen 24 in den Rippenenden 18 definieren miteinander einzelne Kammern, die mit den Einsetzaufnahmen 25 in Verbindung stehen. Die Dichtungskanäle 26 bilden miteinander eine umlaufende isolierende Hohlkammer zwischen den schweißgefügten Öffnungsrandstrukturen R. Die Hohlräume bei 24, 25, 26 nehmen die entstehenden Schweißwülste auf.

Fig. 8 ist eine detaillierte Schnittansicht des Fügebereichs des teilbaren Wassertanks gemäß Fig. 6. In die aufeinander ausgerichteten Einsetzaufnahmen 25 ist ein doppeltkonisches Zentrierglied 31 eingesetzt, das mit einem mittleren Bund Spiel mit einem in dem von den beiden Vertiefungen 24 definierten Hohlraum sitzt. Die inneren und äußeren Passflächen 16, 17 und auch die Rippenenden 18 liegen gegebenenfalls aufeinander. In die Dichtungskanäle 26 ist das Dichtmittel 28 eingesetzt, das entweder eine einstückige Dichtung ist oder, wie gezeigt, aus zwei spiegelbildlichen Dichtstreifen 33 zusammengesetzt ist. Der Flansch 22 in jeder Öffnungsrandstruktur R ist mit einer nach außen weisenden Flanschverlängerung 32 ausgebildet, an der die Klammerwiderlager 23 angeformt sind. Die Schnellverbinder 29 sind C-förmige Klammern, die auf die Klammerwiderlager 23 aufgeschoben sind und die Dichtungen 33 in Dichtschluss halten. Die Weiten der inneren und äußeren Passflächen 16, 17 in Bezug auf die Stärke x der Hälftenwand 30 bzw. der äußeren Dichtungskanalwand 34 wurden bereits anhand Fig. 7 erläutert.

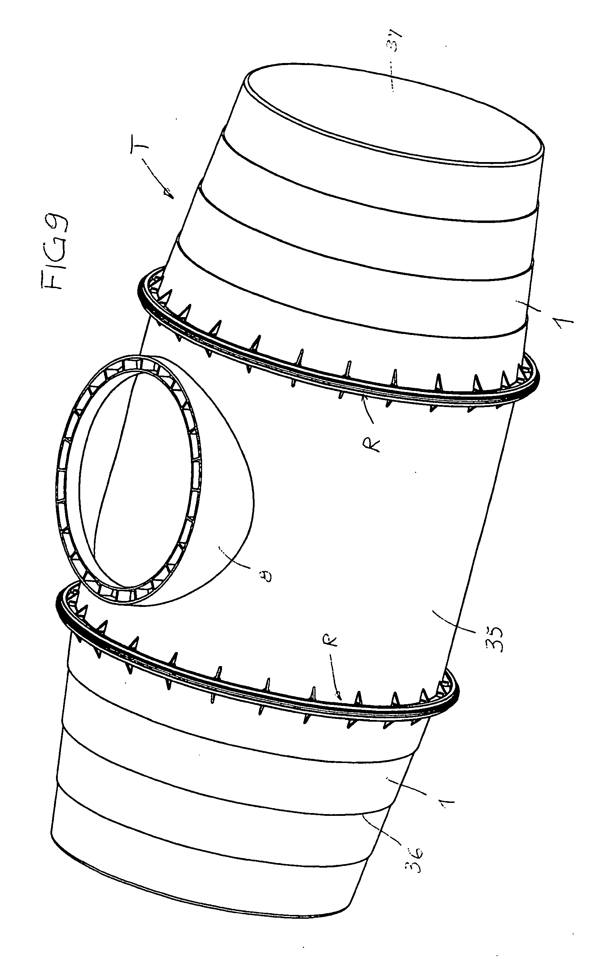

In Fig. 9 ist der Wassertank T aus zwei identischen, mit Umfangsrippen 36 und z.B. ebenen Böden 37 geformten runden, napfartigen Tankteilen 1 und zumindest einem (oder modular erweiterbar mit mehreren) zylindrischen Tankteil 35 gefügt (monolithisch, wie gezeigt, oder mit Klammern). Der Domansatz 8 ist im Tankteil 35 geformt. Der Tankteil 35 weist an beiden Öffnungen die erläuterten oder diesen ähnliche, passende Öffnungsrandstrukturen R auf.

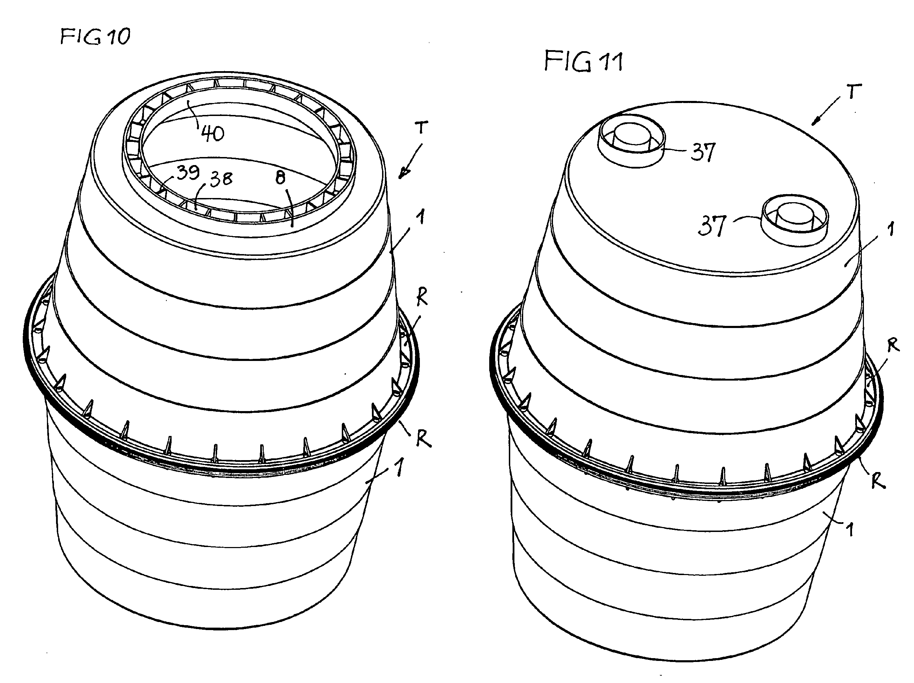

In Fig. 10 ist der Erdeinbau-Wassertank T (monolithisch verschweißt, wie gezeigt, oder mit Klammern, nicht gezeigt) aus den zwei Tankteilen 1 (z.B. entsprechend denen von Fig. 9) gefügt. Einer der Domansätze 8 ist geöffnet, indem die Deckelscheibe 14 (Fig. 2) entfernt ist, so dass eine Öffnung zur Montage eines Deckels oder Tankdoms (nicht gezeigt) gebildet ist. Der Öffnungsrand 38 ist doppelwandig und mit Radialrippen armiert. Innen wird die Öffnung von einem Ringflansch 40 begrenzt.

In Fig. 11 unterscheiden sich die Tankteile 1 dadurch von denen von Fig. 10, dass in der ebenen Oberseite z.B. zwei diametral gegenüberliegende Anschlussstutzen 37 eingeformt sind, von denen die obenliegenden geöffnet sein können, z. B. für eine oberirdische Verwendung des Wassertanks T.

## Patentansprüche

1. Wassertank (T) aus Kunststoff, der unter Einsatz von zumindest zwei offenen Tankteilen (1) fügbar ist, die in einer gemeinsamen Fügeebene (2) zueinander passende Öffnungsrandstrukturen (R) jeweils mit einem abgeflachten inneren Öffnungsrand in Verlängerung der Tankteilwand (30), einem zur Fügeebene (2) offenen Dichtungskanal (26), und einen äußeren abgeflachten Öffnungsrand als Verlängerung einer Dichtungskanalwand (34) aufweisen, wobei die Öffnungsränder in gefügtem Zustand des Wassertanks in Fügerichtung zumindest aufeinander ausgerichtet und in der Öffnungsrandstruktur (R) jedes Tankteiles (1, 35) die Öffnungsränder als innere und äußere, in der Fügeebene (2) liegende Passflächen (16, 17) jeweils mit einer die Stärke (X) der Tankteilwand (30) und der Dichtungskanalwand (34) mindestens um etwa die Hälfte übersteigenden Weite gestaltet sind, und wobei der Wassertank als teilbare Version (G) aus den Tankteilen (1) durch stellenweises Klammerungsfügen der Öffnungsrandstrukturen (R) mit Dichtungsmitteln (33) in den Dichtungskanälen (34) zwischen den Tankteilen (1) erstellbar ist, **dadurch gekennzeichnet, dass** der Wassertank (T) wahlweise auch aus den untereinander identisch als Spritzguss- oder Spritzprägeteile gefertigten Tankteilen (1) durch Schweißfügen der Passflächen (16, 17) und Freilassen der Dichtungskanäle (26) als monolithische Version (M) erstellbar ist.

2. Wassertank nach Anspruch 1, **dadurch gekennzeichnet, dass** in der monolithischen Version (M) des Wassertanks (T) ein Teil in der Fügeebene ausgetretener Schweißwülste in den freigelassenen Dichtungskanälen (26) aufgenommen ist.

3. Wassertank nach Anspruch 1, **dadurch gekennzeichnet, dass** die Tankteile (1, 35) aus HDPE oder PP bestehen.

4. Wassertank nach Anspruch 1, **dadurch gekennzeichnet, dass** die Öffnungsrandstruktur (R) außen angrenzend an die äußere Passfläche (17) entweder direkt oder über einen Verlängerungsflansch (32) an beabstandeten Stellen entlang des Umfangs Klammerwiderlager (23) aufweist.

5. Wassertank nach Anspruch 1, **dadurch gekennzeichnet, dass** die Tankteilwand (30) mit einwärts vorspringenden, bis zur Fügeebene (2) verlaufenden, entlang der inneren Passflächen (16) voneinander beabstandeten Rippen (6, 7) geformt ist, und dass in der Fügeebene (2) liegende Rippenenden (18) Schweißflächen vergrößernde Erweiterungen der inneren Passfläche (16) bilden.

6. Wassertank nach Anspruch 5, **dadurch gekennzeichnet, dass** der Tank (T) zumindest annähernd ein Hohlzylinder mit in etwa halbzylindrischen Tankteilen und nach außen bombierten Endkappen (5) ist, dass die Öffnungsrandstrukturen (R) die Zylinderachse (3) in der Fügeebene (2) enthaltend gefügt sind, dass in jedem Tankteil (1) die Rippen (6, 7) in den Endkappenhälften und in dem halbzylindrischen Teil (4) zueinander parallel sind, wobei die Rippen (6) im halbzylindrischen Teil (4) durchgehend ausgebildet sind, während die Rippen (7) in den Endkappenhälften im Abstand von der ersten bzw. letzten Rippe (6) im halbzylindrischen Teil (4) auslaufen.

7. Wassertank nach Anspruch 6, **dadurch gekennzeichnet, dass** im halbzylindrischen Teil (4) in etwa mittig zwischen den Endkappenhälften ein runder Domansatz (8) eingeformt ist, in dem die Rippen (6) des halbzylindrischen Teils (4) ausgespart sind, und dass der Domansatz (8) eine zur Fügeebene (2) parallele Deckelscheibe (14) enthält, die in etwa mit dem Außenumriss der Endkappenhälfte abschließt.

8. Wassertank nach wenigstens einem der Ansprüche 5 bis 7, **dadurch gekennzeichnet, dass** sich die Rippen (6, 7) einwärts verjüngen und nur in der Öffnungsrandstruktur (R) einen geschlossenen, in etwa trapezförmigen oder dreieckigen Querschnitt aufweisen, dass die von jedem Rippenende (18) gebildete Erweiterung der inneren Passfläche (16) ein geschlossener Randstreifen mit der Form des Rippenquerschnitts und in etwa gleichbleibender Weite ist, der eine gegenüber der Fügeebene (2) zurücktretende Vertiefung (24) umgibt, und dass in den Vertiefungen (24) zumindest einiger Rippen (6, 7), vorzugsweise aller Rippen, jeweils eine Einsetzaufnahme (25) für ein Zentrierglied (31) eingeformt ist.

9. Wassertank nach Anspruch 6, **dadurch gekennzeichnet, dass** zwischen jeweils zwei Rippen (6) im halbzylindrischen Teil (4) des Tankteils (1) eine bis in die Fügeebene (2) offene Trennwand-Haltetasche (20) gebildet ist.

10. Wassertank nach Anspruch 9, **dadurch gekennzeichnet, dass** in zumindest einer Trennwand-Haltetasche (20) innen an der Hälftenwand (30) zwischen zweien der Rippen (6) des halbzylindrischen Teils (4) zumindest ein in etwa zu den Rippen (6) paralleler Dichtungs-Haltesteg (19), vorzugsweise ein Paar Stege, angeformt ist, der in der Öffnungsrandstruktur (R) in der Fügeebene (2) als eine weitere Schweißfläche vergrößernde Erweiterung (21) der inneren Passfläche (16) endet, und über die Innenseite der Deckelscheibe (14) im Domansatz hinweg verläuft.

11. Verfahren zum Herstellen eines Wassertanks (T) unter Einsatz von mindestens zwei offenen Tankteilen (1) mit Öffnungsrandstrukturen (R) durch wasserdichtes Fügen der Öffnungsrandstrukturen, wobei jede Öffnungsstruktur (R) in einer Fügeebene (2) innere und äußere, durch einen Dichtungskanal (26) für ein Dichtungsmittel separierte Passflächen (16, 17) aufweist, **dadurch gekennzeichnet, dass** eine monolithische Version (M) des Wassertanks (T) aus zwei untereinander identisch durch Spritzgießen oder Spritzprägen zum Erstellen einer teilbaren Version (G) des Wassertanks (1) durch stellenweises Klammerungsfügen der Öffnungsrandstrukturen (R) in der Fügeebene (2) mit Dichtungsmitteln (33) in den Dichtungskanälen gefertigten Tankteilen (1) durch durchgehendes Schweißfügen der direkt aufeinanderliegenden inneren und äußeren Passflächen (16, 17) mit freigelassenen Dichtungskanälen (26) erstellt wird.

12. Verfahren nach Anspruch 11, **dadurch gekennzeichnet, dass** jede Öffnungsrandstruktur (R) angrenzend an die äußere Passfläche (17) mit Klammerwiderlagern (23) geformt wird, und dass die Klammerwiderlager (23) bei der Erstellung der monolithischen Version (M) des Wassertanks (T) vor oder nach dem Schweißfügen mechanisch abgetragen werden.

13. Verfahren nach Anspruch 11, **dadurch gekennzeichnet, dass** beim Schweißfügen die Passflächen (16, 17, 18, 21) thermisch plastifiziert und anschließend bis zur Formung in der Fügeebene (2) austretender Schweißwülste aneinander gepresst werden.

14. Verfahren nach Anspruch 11, **dadurch gekennzeichnet, dass** für die teilbare Version (G) des Wassertanks (T) jede Öffnungsrandstruktur (R) angrenzend an die äußere Passfläche (17) mit einer äußeren Flanschverlängerung (32) und von der Fügeebene (2) wegweisenden Klammerwiderlagern (23) an der Flanschverlängerung (32) geformt wird, dass bei der Erstellung der monolithischen Version des Wassertanks (T, M) die Passflächen (16, 17) der Tankteile (1, 35) bis zur Formung aus der Fügeebene (2) herausquellender Schweißwülste verschweißt werden, und dass anschließend der äußere Schweißwulst mit den Flanschverlängerungen (32) und den Klammerwiderlagern (23) abgetragen wird.

## Claims

1. Water tank (T) made from plastic material, which water tank is to be joined from at least two open tank parts (1), the tank parts (1) having opening edge structures (R) matching each other in a common joining plane (2), each opening edge structure (R) having a flattened inner opening edge continuing a wall (30) of the tank part (1), a sealing receiving channel (26) for a sealing means, the sealing receiving channel (26) being open towards the joining plane (2), and an outer flattened opening edge continuing a wall (34) of the sealing receiving channel (26), the opening edges of the tank parts in joined condition of the water tank being aligned with each other in the joining direction and forming inner and outer fitting surfaces (16, 17) in the opening edge structure (2) of each tank part (1, 35) respectively lying in the joining plane (2) with a width exceeding the thickness (X) of the wall (30) of the tank part and the of wall (34) of the sealing receiving channel by at least about the half, the opening edge structures (S) being designed such that the water tank (T) is to be assembled with the tank parts (1, 35) in a separable watertight version (G) with sealing means (33) provided in the sealing receiving channels (34) between the tank parts (1) by local releasable clamping joining of the opening edge structures (R), **characterised in that** the water tank (T) is to be assembled selectively also in a monolithic version (M) from the tank parts (1), which tank parts (1) are identical to each other and are fabricated by injection moulding or injection moulding and embossing by welding the fitting surfaces (16, 17) on each other without providing sealing means in the sealing receiving channels (26).

2. Water tank according to claim 1, **characterised in that** a part of welding beads escaped in the joining plane of the monolithic version (M) of the water tank (T) are received in empty sealing receiving channels (26).

3. Water tank according to claim 1, **characterised in that** the tank parts (1, 35) consist of HDPE or PP (high density polyethylene or polypropylene).

4. Water tank according to claim 1, **characterised in that** the opening edge structure (R) is provided with clamping skewbacks (23) at spaced apart locations along the circumference, the clamping skewbacks (23) being located either directly the outer fitting surface (17) or at a prolonging flange (32).

5. Water tank according to claim 1, **characterised i**n that the wall (30) of the tank part (1) is formed with inwardly protruding ribs (6, 7) extending to the joining plane (2), the ribs (6, 7) being spaced apart along the inner fitting surface (16), and that rib ends (18) situated in the joining plane (2) define extensions of the inner fitting surface (16) for enlarging welding surfaces.

6. Water tank according to claim 5, **characterised in that** the water tank (T) at least substantially has the shape of a hollow cylinder consisting of substantially semi-cylindrical parts (4) and outwardly rounded end caps (5), that the opening edge structures (R) are joined such that cylinder axis (3) is situated in the joining plane (2), that the ribs (6, 7) in the end cap halves and in the semi-cylindrical part (4) of each tank part (1) are parallel to each other, the ribs (6) in the semi-cylindrical part (4) being formed continuously, while the ribs (7) formed in the end cap halves terminate with a respective distance from the first and last rib (6) of the semi-cylindrical part (4).

7. Water tank according to claim 6, **characterised in that** a round dome boss (8) is formed into the semi-cylindrical part (4) substantially midway between the end cap halves, the ribs (6) of the semi-cylindrical part (4) being interrupted in the dome boss (8), and that the dome boss (8) contains a cover lid (14) which is parallel to the joining plane (2) and which extends substantially flush with the outer contour of the end caphalf.

8. Water tank according to at least one of claims 5 to 7, **characterised in that** the ribs (6, 7) are tapering inwardly and define a closed, substantially trapezoidal or triangular cross-section only within the opening edge structure (R), that the extension of the inner fitting surface (16) defined by each rib end (18) is continuous and closed edge strip following the shape of the rib cross-section and having substantially constant width, the edge strip surrounding a recess (24) which is set back in relation to the joining plane (2), and that a respective insertion socket (25) for a centring member (31) is formed in the recesses (24) of at least some of the ribs (6, 7), preferably in the recesses (24) of all ribs.

9. Water tank according to claim 6, **characterised in that** a separation wall holding pocket (20) is formed between respective two ribs (6) in the semi-cylindrical part (4) of the tank part (1), the holding pocket (20) being open along its extension into the joining plane (2).

10. Water tank according to claim 9, **characterised in that** within at least one separation wall holding pocket (20) between two of the ribs (6) at the inner side of a wall (30) of the half of the semi-cylindrical part (4) at least one sealing holding web (19) is formed substantially parallel to the ribs (6), preferably a pair of sealing holding webs (19), the sealing holding web (19) extending across the inner side of the cover lid (14) in the dome boss and terminating in the joining plane (2) as a further extension (21) of the inner fitting surface (16) enlarging the welding surface.

11. Method for manufacturing a water tank (T) by use of at least two open plastic material tank parts (1) each having an opening edge structure (R) consisting of inner and outer fitting surfaces (16, 17) separated in a joining plane (2) by an open sealing receiving channel (26) for a sealing means, by joining the opening edge structures (R) into a watertight condition, **characterised in that** a monolithic version (M) of the water tank (T) is manufactured from two identical tank parts (1) which are fabricated by injection moulding or injection moulding and embossing, for assembling a separable version (G) of the water tank (T) by local releasable clamping joining the opening edge structures (R) in a joining plane (2),with sealing means (33) in the sealing receiving channels (26), by continuously welding the inner and outer directly abutting fitting surfaces (16, 17) to each other with the sealing receiving channels (26) left empty.

12. Method according to claim 11, **characterised i**n that each opening edge structure (R) is formed with clamping skewbacks (23) adjacent to the outer fitting surface (17), and that when manufacturing the monolithic version (M) of the water tank (T) the clamping skewbacks (23) are mechanically removed prior to or after the welding.

13. Method according to claim 11, **characterised in that** the inner and outer fitting surfaces (16, 17, 18, 21) are thermally plasticised during welding and subsequently are pressed against each other, until welding beads escape in the joining plane (2).

14. Method according to claim 11, **characterised in that** for the separable version (G) of the water tank (T) each opening edge structure (R) is formed with an outer prolonging flange (32) and clamping skewbacks (23) at the prolonging flange (32), which clamping skewbacks (23) are directed away from the joining plane (2), that during manufacturing the monolithic version (M) of the water tank (T) the inner and outer fitting surfaces (16, 17, 18, 21) of the tank parts (1, 35) are welded to each other until welding beads escape in the joining plane (2) and that subsequently the outer welding bead, the prolonging flange (32) and the clamping skewbacks (23) are removed.

## Revendications

1. Citerne d'eau (T) en matière plastique qui peut être assemblée en utilisant au moins deux parties de citerne (1) ouvertes qui présentent dans un plan d'assemblage commun (2) des structures de bord d'ouverture (R) adaptées les unes aux autres respectivement avec un bord d'ouverture intérieur aplati dans le prolongement de la paroi de partie de citerne (30), un canal d'étanchéité (26) ouvert vers le plan d'assemblage (2) et un bord d'ouverture aplati extérieur servant de prolongement d'une paroi de canal d'étanchéité (34), les bords d'ouverture étant alignés à l'état assemblé de la citerne d'eau dans le sens d'assemblage au moins les uns sur les autres et dans la structure de bord d'ouverture (R) de chaque partie de citerne (1, 35), les bords d'ouverture étant conçus comme des surfaces d'ajustement (16, 17) intérieures et extérieures, se trouvant dans le plan d'assemblage (2) respectivement avec une largeur dépassant l'épaisseur (X) de la paroi de partie de citerne (30) et de la paroi de canal d'étanchéité (34) au moins à peu près de la moitié, et la citerne d'eau pouvant être réalisée comme une version (G) divisible composée des parties de citerne (1) par assemblage par agrafes par endroits des structures de bord d'ouverture (R) avec des moyens d'étanchéité (33) dans les canaux d'étanchéité (34) entre les parties de citerne (1), **caractérisée en ce que** la citerne d'eau (T) peut être réalisée au choix également comme une version (M) monolithique à partir de parties de citerne (1) fabriquées entre elles de manière identique comme des pièces moulées par injection ou estampées par injection par assemblage par soudage des surfaces d'ajustement (16, 17) et dégagement des canaux d'étanchéité (26).

2. Citerne d'eau selon la revendication 1, **caractérisée en ce que** dans la version (M) monolithique de la citerne d'eau (T) est logée une partie des cordons de soudure sortis dans le plan d'assemblage dans les canaux d'étanchéité (26) dégagés.

3. Citerne d'eau selon la revendication 1, **caractérisée en ce que** les parties de réservoir (1, 35) se composent d'HDPE ou de PP.

4. Citerne d'eau selon la revendication 1, **caractérisée en ce que** la structure de bord d'ouverture (R) présente à l'extérieur de manière contiguë à la surface d'ajustement (17) extérieure directement ou au-dessus d'une bride de prolongement (32) sur des endroits espacés le long de la périphérie, des contre-appuis d'agrafes (23).

5. Citerne d'eau selon la revendication 1, **caractérisée en ce que** la paroi de partie de citerne (30) est formée par des nervures (6, 7) espacées les unes des autres le long des surfaces d'ajustement (16) intérieures, s'étendant jusqu'au plan d'assemblage (2), dépassant vers l'intérieur, et **en ce que** des extrémités de nervure (18) se trouvant dans le plan d'assemblage (2) forment des élargissements agrandissant des surfaces de soudage de la surface d'ajustement (16) intérieure.

6. Citerne d'eau selon la revendication 5, **caractérisée en ce que** la citerne (T) est au moins approximativement un cylindre creux avec des parties de réservoir à peu près semi-cylindriques et des chapeaux terminaux (5) bombés vers l'extérieur, **en ce que** les structures de bord d'ouverture (R) sont assemblées de manière à contenir l'axe de cylindre (3) dans le plan d'assemblage (2), **en ce que** dans chaque partie de citerne (1), les nervures (6, 7) dans les moitiés de chapeaux terminaux et dans la partie (4) semi-cylindrique sont parallèles les unes aux autres, les nervures (6) dans la partie (4) semi-cylindrique étant réalisées de manière continue, alors que les nervures (7) dans les moitiés de chapeaux terminaux débouchent à distance de la première ou de la dernière nervure (6) dans la partie (7) semi-cylindrique.

7. Citerne d'eau selon la revendication 6, **caractérisée en ce que** dans la partie (4) semi-cylindrique, une saillie de dôme (8) ronde est formée à peu près au milieu entre les moitiés de chapeaux terminaux, dans laquelle les nervures (6) de la partie (4) semi-cylindrique sont évidées, et **en ce que** la saillie de dôme (8) contient un disque couvercle (14) parallèle au plan d'assemblage (2), qui se termine à peu près avec le contour extérieur de la moitié de chapeaux terminaux.

8. Citerne d'eau selon au moins l'une des revendications 5 à 7, **caractérisée en ce que** les nervures (6, 7) se rétrécissent vers l'intérieur et présentent seulement dans la structure de bord d'ouverture (R) une section fermée, à peu près trapézoïdale ou triangulaire, **en ce que** l'élargissement formé par chaque extrémité de nervure (18) de la surface d'ajustement (16) intérieure est une bande latérale fermée présentant la forme de la section de nervure et une largeur à peu près identique, qui entoure une cavité (24) en retrait par rapport au plan d'assemblage (2), et **en ce que** dans les cavités (24) d'au moins quelques nervures (6, 7) de préférence de toutes les nervures, est formé respectivement un logement d'insertion (25) pour un organe de centrage (31).

9. Citerne d'eau selon la revendication 6, **caractérisée en ce qu'**une poche de retenue (20) de paroi de séparation ouverte jusque dans le plan d'assemblage (2) est formée entre respectivement deux nervures (6) dans la partie (4) semi-cylindrique de la partie de citerne (1).

10. Citerne d'eau selon la revendication 9, **caractérisée en ce que** dans au moins une poche de retenue (20) de la paroi de séparation est formée à l'intérieur sur la paroi de moitié (30) entre deux des nervures (6) de la partie (4) semi-cylindrique au moins une barrette de retenue d'étanchéité (19) à peu près parallèle aux nervures (6), de préférence une paire de barrettes qui se termine dans la structure de bord d'ouverture (R) dans le plan d'assemblage (2) comme un autre élargissement (21) agrandissant la surface de soudage de la surface d'ajustement (16) intérieure, et s'étend au-delà du côté intérieur du disque couvercle (14) dans la saillie de dôme.

11. Procédé de fabrication d'une citerne d'eau (T) en utilisant au moins deux parties de citerne (1) ouvertes avec des structures de bord d'ouverture (R) par assemblage étanche à l'eau des structures de bord d'ouverture, chaque structure d'ouverture (R) présentant dans un plan d'assemblage (2) des surfaces d'ajustement (16, 17) intérieures et extérieures, séparées par un canal d'étanchéité (26) pour un moyen d'étanchéité, **caractérisé en ce qu'**une version (M) monolithique de la citerne d'eau (T) se composant de deux parties de citerne (1) fabriquées de manière identique entre elles par moulage par injection ou estampage par injection pour réaliser une version (G) divisible de la citerne d'eau (1) par assemblage par agrafes par endroits des structures de bord d'ouverture (R) dans le plan d'assemblage avec des moyens d'étanchéité (33) dans les canaux d'étanchéité est réalisée par assemblage par soudage continu des surfaces d'ajustement (16, 17) intérieures et extérieures se trouvant directement l'une sur l'autre avec des canaux d'étanchéité (26) dégagés.

12. Procédé selon la revendication 11, **caractérisé en ce que** chaque structure de bord d'ouverture (R) est formée de manière contiguë à la surface d'ajustement (17) extérieure avec des contre-appuis d'agrafes (23), et **en ce que** les contre-appuis d'agrafes (23) sont enlevés mécaniquement lors de la réalisation de la version (M) monolithique de la citerne d'eau (T) avant ou après l'assemblage par soudage.

13. Procédé selon la revendication 11, **caractérisé en ce que** lors de l'assemblage par soudage, les surfaces d'ajustement (16, 17, 18, 21) sont plastifiées thermiquement puis pressées l'une sur l'autre jusqu'à la formation de cordons de soudure sortant dans le plan d'assemblage.

14. Procédé selon la revendication 11, **caractérisé en ce que** pour la version (G) divisible de la citerne d'eau (T), chaque structure de bord d'ouverture (R) est formée de manière contiguë à la surface d'ajustement (17) extérieure avec un prolongement de bride (32) extérieur et des contre-appuis d'agrafes (23) éloignés du plan d'assemblage (2) sur le prolongement de bride (32), **en ce que** lors de la réalisation de la version monolithique de la citerne d'eau (T, M), les surfaces d'ajustement (16, 17) des parties de réservoir (1, 35) sont soudées jusqu'à la formation de cordons de soudure sortant du plan d'assemblage (2), et **en ce que** le cordon de soudure extérieur est ensuite enlevé avec les prolongements de bride (32) et les contre-appuis d'agrafes (23).
